# EUROPÄISCHE PATENTSCHRIFT

(11) **EP 3 797 924 B1**
(45) Veröffentlichungstag und Bekanntmachung des Hinweises auf die Patenterteilung: **16.03.2022**
(21) Anmeldenummer: 19199506.7
(22) Anmeldetag: 25.09.2019
(51) Int. Cl.: B23Q 1/03, B23Q 1/54, B23Q 3/08

(54) **VORRICHTUNG ZUR LÖSBAREN FIXIERUNG EINES ZU VERMESSENDEN UND/ODER ZU BEARBEITENDEN WERKSTÜCKS UND VERFAHREN ZUR LAGERUNG EINES ZU VERMESSENDEN UND/ODER ZU BEARBEITENDEN WERKSTÜCKS MIT MINDESTENS EINER DERARTIGEN VORRICHTUNG**
DEVICE FOR THE RELEASABLY FIXING OF A WORKPIECE TO BE MEASURED AND / OR TREATED AND METHOD FOR STORING A WORKPIECE TO BE MEASURED AND / OR TREATED WITH AT LEAST ONE SUCH DEVICE
DISPOSITIF DE FIXATION AMOVIBLE D'UNE PIECE A MESURER ET / OU D'UTILISER, ET PROCEDE DE STOCKAGE D'UNE PIECE A MESURER ET / OU D'UTILISER AU MOINS UN TEL DISPOSITIF

(43) Veröffentlichungstag der Anmeldung: 31.03.2021
(73) Patentinhaber: Josef Weischer GmbH & Co. KG, 48282 Emsdetten (DE)
(72) Erfinder: Borchert, Ludwig, 48480 Spelle (DE); Hune, Rupert, 49090 Osnabrück (DE)
(74) Vertreter: Dr. Binder & Binder GbR

(56) Entgegenhaltungen:
- WO-A1-2015/019210
- WO-A1-2018/045463
- WO-A2-2009/056079
- DE-U1- 20 306 263
- DE-U1- 20 319 159

## Beschreibung

Die Erfindung betrifft eine Vorrichtung zur lösbaren Fixierung eines zu vermessenden und/oder zu bearbeitenden Werkstücks sowie ein Verfahren zur Lagerung eines zu vermessenden und/oder zu bearbeitenden Werkstückes mit mindestens einer derartigen Vorrichtung.

Aus der DE 102 30 270 B4 ist eine Vorrichtung zur lösbaren Fixierung einer gleichmäßig gekrümmten Oberfläche eines zu bearbeitenden, tafelförmigen Werkstückes bekannt, wobei das zu bearbeitende Werkstück ein großflächiges, gewölbtes Laminatblech ist. Die aus dieser Druckschrift bekannte Vorrichtung weist ein Gehäuse auf, in dem mehrere Stützstreben translatorisch bewegbar gelagert sind, sodass diese an die Wölbung des Werkstückes angepasst werden können. Am werkstückseitigen Ende der Stützstreben sind Halterungen zur Fixierung eines Profils angeordnet, an dem Saugnäpfe befestigt sind, die an eine Unterdruckerzeugungseinrichtung angeschlossen sind. Die Stützstreben, die Halterungen, das Profil und die Saugnäpfe bilden gemeinsam eine Einheit zur Fixierung einer Seite des zu bearbeitenden Werkstückes. Auf der dieser Einheit gegenüberliegenden Seite des Werkstückes ist eine weitere derartige Einheit vorgesehen, die das Werkstück zusätzlich von seiner Rückseite her fixiert, sodass das Werkstück mittels der Saugnäpfe und dem vorhandenen Unterdruck (Vakuum) beidseitig eingespannt ist. Während der Fixierung des Werkstückes über die Saugnäpfe passen sich diese infolge des anliegenden Unterdrucks unmittelbar an die Oberfläche des Werkstückes an, gehen jedoch in ihre ursprüngliche Ausgangsform zurück, wenn sie vom Werkstück gelöst werden.

Zum Fixieren tafelförmiger Werkstücke für spezielle Formen der Bearbeitung sind allgemein Vorrichtungen bekannt, die aus Elementen in Form von selektiv ausfahrbaren Stangen bestehen, die am freien Ende mit einer Art Saugnapf versehen sind. In diesem Sinne beschreibt das Patent DE 1 903 576 C eine Vorrichtung aus manuell positionierbaren Stützen mit einem Haltenapf an ihrem freien Ende.

Weitere Beispiele für Vorrichtungen mit Haltestützen, die am freien Ende ein napfförmiges Auflageelement in Verbindung mit einer Lufteinrichtung aufweisen, sind die Patente GB 120697, US 3681834 A und EP 0069230 B1.

Den bislang bekannten Lösungen ist gemein, dass sie jeweils Stützstreben aufweisen, die ausschließlich linear beziehungsweise translatorisch bewegt werden können und damit nicht für jeden Einsatzzweck geeignet sind. Zudem werden bei einigen Ausführungsvarianten für die Bewegung einer jeden Stützstrebe jeweils gesonderte Antriebe erforderlich, sodass damit ein erheblicher konstruktiver Aufwand einhergeht, was die Herstellungskosten für eine derartige Vorrichtung erheblich steigert.

Aus der DE 196 37 547 A1 ist darüber hinaus eine Vorrichtung mit einer Lagereinheit bekannt, bei der die Lagereinheit mehrere, in ihrer Länge variierbare Stellglieder aufweist, die jeweils um Gelenke schwenkbar, einerseits an einer Bodenplatte und andererseits, also mit ihrem der Bodenplatte gegenüberliegenden Ende, an einer Tragplatte befestigt sind. Gemäß dem Offenbarungsgehalt dieser Druckschrift werden hierbei jeweils zwei Stellglieder V-förmig in einem gemeinsamen Gelenk mit der Bodenplatte und beabstandet zueinander über separate Gelenke mit der Tragplatte verbunden. Die Stellglieder sind jeweils als Kolben-Zylindereinheiten ausgebildet, von denen eines der beiden Stellglieder einer V-förmigen Anordnung ausschließlich verkürzbar und das jeweils andere Stellglied ausschließlich längbar ist. Als Gelenke kommen bei dieser Lösung bevorzugt Kugelgelenke zum Einsatz. Eine derartige Lagereinheit wird auch als Hexapod bezeichnet, wobei in der Druckschrift eine spezielle Ausführungsvariante eines derartigen Hexapods beschrieben ist.

Aus der DE 203 19 159 U1 ist eine Vorrichtung nach dem Oberbegriff des Anspruchs 1 bekannt. Ganz allgemein handelt es sich bei einem Hexapod um eine spezielle Form einer Parallelkinematikmaschine, die über sechs Beine veränderlicher Länge verfügt. Die typische Konstruktion des Hexapods ermöglicht eine Beweglichkeit in allen sechs Freiheitsgraden (drei translatorische sowie drei rotatorische). Durch die parallele Anordnung der Antriebe besitzen Hexapode verglichen mit seriellen Robotern ein besseres Verhältnis von Nutzlast zu Eigengewicht.

Eine besondere Problematik besteht häufig darin, Werkstücke mit einer sehr komplexen Formgebung zu lagern beziehungsweise einzuspannen, um sie zu vermessen und/oder zu bearbeiten. Bei der Bearbeitung kann es sich beispielsweise um spanende Verfahren, also um Fräsverfahren, Bohrverfahren oder Schneidverfahren handeln. Dabei dürfen die einzelnen Stützstreben oder Halterungen den Bearbeitungswerkzeugen nicht im Wege sein. Die hierfür zum Einsatz kommenden Vorrichtungen müssen ferner das Werkstück möglichst in einer Weise einspannen, dass dieses, ohne Verformungen oder Eigenspannungen auszubilden, fixiert werden kann. Nur so kann eine qualitativ hochwertige und maßgenaue Vermessung und/oder Bearbeitung des Werkstückes erfolgen.

Der Erfindung liegt die Aufgabe zugrunde, eine Vorrichtung zur lösbaren Fixierung eines zu vermessenden und/oder zu bearbeitenden Werkstücks bereitzustellen, die auch für sehr komplexe Werkstückgeometrien geeignet ist und daher eine im Vergleich mit bekannten Lösungen verbesserte Beweglichkeit aufweist. Darüber hinaus ist ein Verfahren anzugeben, wie ein Werkstück mittels einer derartigen Vorrichtung gelagert werden kann.

Die Erfindung löst diese Aufgabenstellung mit den Merkmalen der unabhängigen Patentansprüche 1 und 14.

Weitere Ausgestaltungen der Erfindung sind Gegenstand der sich jeweils anschließenden Unteransprüche.

Eine erfindungsgemäße Vorrichtung zur lösbaren Fixierung eines zu vermessenden und/oder zu bearbeitenden Werkstücks weist mindestens eine Stützstrebe auf, an deren dem Werkstück zugewandten Ende ein Adapter angeordnet ist. Die Stützstrebe ist dabei mit ihrem dem Werkstück gegenüberliegenden Ende schwenkbar, rotierbar und in ihrer axialen Länge veränderbar in einem Gehäuse gelagert, während der Adapter eine Lagereinheit aufnimmt, die als Hexapod ausgebildet ist.

Die Kombination aus der in mehreren Bewegungsrichtungen in ihrer Lage veränderbaren Stützstrebe und dem Hexapod der Lagereinheit bietet eine 3-dimensionale Beweglichkeit der Vorrichtung zur lösbaren Fixierung eines zu vermessenden und/oder zu bearbeitenden Werkstücks, deren Genauigkeit überraschend ist und mit der auch sehr komplexe Werkstückgeometrien problemlos fixiert werden können. Die Vorrichtung ist aufgrund ihrer extremen Beweglichkeit sogar in der Lage, in Vertiefungen eines Werkstückes einzurücken und selbst in derartigen Bereichen das Werkstück zu fixieren. Mit der erfindungsgemäßen Lösung ist eine sehr flexible Anpassung der Vorrichtung an die Oberfläche und an spezielle Geometrien des zu fixierenden Werkstückes möglich. Insbesondere durch die zusätzlich zu der Bewegungsmöglichkeit der Stützstrebe in axialer Richtung gegebene Rotationsbewegung und die Möglichkeit einer Schwenkbewegung können die genannten Vorteile erreicht werden. Damit ist die erfindungsgemäße Vorrichtung auch geeignet, das Werkstück in Bereichen zu fixieren, die bisher für eine Fixierung oder Einspannung nicht zugänglich waren. Eine wesentliche Verbesserung erfährt die Erfindung noch durch die zusätzlich vorhandene Lagereinheit, die ihrerseits ebenfalls translatorisch und/oder rotatorisch bewegbar und/oder schwenkbar ausgeführt ist. Dadurch wird die gesamte Vorrichtung insgesamt sehr beweglich, gelenkig und in ihrem Anwendungsbereich extrem flexibel und trotzdem in ihrem fixierten Zustand sehr stabil. Je komplexer ein Werkstück ausgebildet ist, umso mehr erfindungsgemäße Vorrichtungen können zum Einsatz kommen, um das Werkstück optimal und spannungsfrei zu fixieren.

Ein besonderer Vorzug der erfindungsgemäßen Vorrichtung ergibt sich aus einer ersten Ausgestaltung der Erfindung, nach der die als Hexapod ausgebildete Lagereinheit mehrere, in ihrer Länge variierbare Stellglieder aufweist, die jeweils um Gelenke schwenkbar, einerseits an einer Bodenplatte und andererseits, also mit ihrem der Bodenplatte gegenüberliegenden Ende, an einer Tragplatte befestigt sind. Hexapode sind an sich bekannt. Diese jedoch in Kombination mit der in mehreren Richtungen beweglichen Stützstrebe einzusetzen, schafft vollkommen neue Möglichkeiten der Lagerung und Fixierung eines Werkstückes. Die hohe Präzision der erfindungsgemäßen Vorrichtung gestattet auch das Vermessen von Werkstücken mit einer bislang nicht gekannten Genauigkeit.

Ein besonderer Vorteil der Vorrichtung nach der Erfindung ist ferner darin zu sehen, dass die Tragplatte flanschartig als Basis für die Aufnahme eines austauschbaren Fixierungselements ausgeführt ist. Durch die flanschartige Ausführung der Tragplatte wird es möglich, das Fixierungselement im Sinne eines Schnellspannsystems auszutauschen und damit den jeweils gegebenen aktuellen Erfordernissen für die Einspannung des Werkstücks in kürzester Taktzeit anzupassen. Die Ausführung der Tragplatte als Flansch bedeutet dabei, dass hier sowohl ein mechanisches Spannsystem, als auch hydraulische oder pneumatische Spannsysteme zum Einsatz kommen können. Als ein spezielles Beispiel sei an dieser Stelle ein Nullpunkt-Spannsystem erwähnt. Auch darin drückt sich die besondere Flexibilität der Verbindung zwischen Tragplatte und Fixierungselement aus.

Um das Werkstück mithilfe des Fixierungselementes optimal festlegen zu können, wird darüber hinaus vorgeschlagen, dass das Fixierungselement an seiner an der Oberfläche des Werkstücks anliegenden Seite einen Kugelkopf, einen Stift, einen Magneten, einen Saugnapf, einen Gewindestift oder ein Spann- oder Greifwerkzeug aufweist. Aus den genannten Fixierungselementen kann entsprechend den Gegebenheiten der Oberfläche des Werkstücks ausgewählt werden. Aufgrund des Umstandes, dass die Tragplatte flanschartig ausgeführt ist, kann das Fixierungselement in kurzer Zeit ausgetauscht werden, sodass auch eine Anpassung an verschiedene Werkstücke innerhalb kürzester Taktzeiten möglich wird.

Die Fixierung eines einzuspannenden Werkstücks erfolgt anhand räumlicher Koordinaten. Um diesen Vorgang möglichst automatisieren zu können, ist es von Vorteil eine "Nulllage" zu definieren, sodass die Vorrichtung insgesamt kalibriert ist und, von dieser Position ausgehend, anhand des räumlichen Koordinatensystems, jede beliebige Stellung im Raum einnehmen kann. Nur auf diese Weise kann ein Werkstück mit komplexer Oberflächengeometrie optimal fixiert werden. Aus dem genannten Grund wird entsprechend einer sehr vorteilhaften Weiterbildung der Erfindung vorgeschlagen, dass der Adapter ein Justierelement aufweist, das bei vollständig abgesenkter Stützstrebe in eine korrespondierende und zu dem Justierelement komplementär ausgeführte Aussparung des Gehäuses der Vorrichtung eingerückt ist. Ein derartiges Justierelement dient damit der Kalibrierung der Vorrichtung. Ausgehend von der dadurch definierten "Nulllage" kann die Vorrichtung zum Beispiel anhand vorgegebener CAD-Daten an die Oberfläche des zu fixierenden Werkstücks angepasst werden. Das Justierelement ist damit ein wesentliches Hilfsmittel für die automatisierte Einstellung der gesamten Vorrichtung.

Ein sehr vorteilhaftes Beispiel für die Optimierung der Beweglichkeit der Stützstrebe ist ferner darin zu sehen, dass diese an ihrem dem Werkstück gegenüberliegenden Ende ein Kugelgelenk aufweist. Mit einem Kugelgelenk lassen sich Rotationsbewegungen realisieren und Schwenkbewegungen in mehreren Freiheitsgraden umsetzen. Der Aufbau eines derartigen Kugelgelenks ist verhältnismäßig einfach, es ist zudem robust und platzsparend, was in einer erfindungsgemäßen Vorrichtung von besonderer Bedeutung ist.

Eine besonders einfache Ausführungsvariante eines derartigen Kugelgelenkes kann darin gesehen werden, dass das Kugelgelenk eine mit der Stützstrebe verbundene Lagerkugel aufweist, die in dem Gehäuse der Vorrichtung beweglich gelagert ist. Die Lagerkugel kann dabei bevorzugt auf die Stützstrebe aufgesetzt oder alternativ hierzu auch an der Stützstrebe ausgebildet sein. Mit Hilfe der Lagerkugel lassen sich auf diese Weise nicht nur die Rotations- und Schwenkbewegungen der Stützstrebe auf einfache Weise realisieren. Es ist darüber hinaus auch möglich, eine Verstellung der Stützstrebe in axialer Richtung umzusetzen. Hierfür wird die Stützstrebe durch eine zentrale, kreiszylindrische Bohrung der Lagerkugel geführt, sodass die Stützstrebe die Lagerkugel durchdringt. Somit lässt sich mit einer verhältnismäßig einfachen Baugruppe sowohl eine axiale Bewegung der Stützstrebe, als auch eine Rotationsbewegung und lassen sich Schwenkbewegungen in beliebigen Richtungen umsetzen. Anders ausgedrückt handelt es sich hierbei um eine sehr einfach zu realisierende Maßnahme, die jedoch wesentliche Vorteile für die Vorrichtung und für die maßgenaue Lagerung und Fixierung des Werkstückes mit sich bringt.

Zur weiteren Verbesserung der Lagerungseigenschaften der Lagerkugel kann darüber hinaus zusätzlich eine Lagerschale vorgesehen werden, die die Lagerkugel in dem Gehäuse der Vorrichtung aufnimmt. Dabei ist es möglich, als Lagerschale eine Kunststoff-Lagerschale oder eine metallische Lagerschale zu verwenden. Die Auswahl der entsprechenden Werkstoffe für die Lagerschale richtet sich dabei nach den zu erwartenden Belastungen, die durch das einzuspannende beziehungsweise zu fixierende Werkstück zu erwarten sind.

Da die Einstellung der Position der Stützstrebe der Vorrichtung in Anpassung an die Oberfläche des zu fixierenden Werkstücks möglichst flexibel sein muss, geht ein weiterführender Vorschlag der Erfindung dahin, die Lagerkugel mit mehreren, in ihre Mantelfläche eingebrachten Schlitzen auszustatten. Die Schlitze gestatten dabei eine zentripetale, also zum geometrischen Mittelpunkt der Lagerkugel hin gerichtete Verspannung der Lagerkugel, sodass aufgrund der damit gegebenen Elastizität der Lagerkugel Spanneinheiten unmittelbar an der Lagerkugel angreifen können, die dadurch die innerhalb der Lagerkugel geführte Stützstrebe zusammen mit der Lagerkugel in jeder gewünschten Position fixieren.

Der Verlauf der Schlitze der Lagerkugel wird dabei an die zu erwartenden Belastungen angepasst. So können beispielsweise die die Lagerkugel in radialer Richtung bevorzugt aber nicht zwingend vollständig durchdringenden Schlitze mäanderförmig verlaufen oder abwechselnd, in zueinander entgegengesetzt orientierten Richtungen bis über den Äquator der Lagerkugel hinaus in die Lagerkugel eingebracht sein. Dabei sind andere Verlaufsformen der Schlitze selbstverständlich möglich, die sich aufgrund empirischer Erfahrungen oder anhand von Versuchen ergeben können, um möglichst optimale Einspannergebnisse der Stützstrebe zu erreichen.

Um die Stützstrebe in jeder gewünschten Position fixieren zu können, geht eine weiterbildende Maßnahme nach der Erfindung dahin, dass das Kugelgelenk und hier insbesondere die Lagerkugel zur Ausrichtung der Stützstrebe in einer zur Fixierung des Werkstücks geeigneten Position mittels eines pneumatischen, hydraulischen oder elektromagnetischen Spannmechanismus fixiert wird. Von besonderer Bedeutung ist hierbei, dass bevorzugt keine mechanischen Spannmechanismen zum Einsatz kommen, sondern die Fixierung der Stützstreben in der gewünschten Position möglichst automatisiert erfolgen kann. So ist die Ausrichtung zum Beispiel automatisierbar, in dem ein programmgesteuerter Roboter die Stützstreben anhand vorgegebener CAD-Daten unmittelbar in ihrer für die Fixierung des Werkstücks geeigneten Position ausrichtet, sodass nach der auf diese Weise erfolgten Ausrichtung der Stützstreben der Spannmechanismus zum Einsatz kommt, der die Stützstreben im Bereich des Kugelgelenkes fixiert.

Gemäß einer speziellen Ausgestaltung dieser Lösung wird darüber hinaus vorgeschlagen, dass der in dem Gehäuse der Vorrichtung aufgenommene Spannmechanismus zur sphärischen Klemmung der Lagerkugel des Kugelgelenks mindestens einen Kolben, insbesondere einen Pneumatikkolben, einen Federenergiespeicher mit Klemmbacken, einen Elektromagneten oder einen Hydraulikstößel aufweist. Gegebenenfalls kann hier auch ein Keilgetriebe mit einem Pneumatikkolben zum Einsatz kommen. Letztlich handelt es sich bei den Spannmechanismen um Vorrichtungen, die an der Außenoberfläche der Lagerkugel angreifen und diese in zentripetaler Richtung verspannen, sodass die in der Lagerkugel geführte Stützstrebe auf diese Weise fixiert wird.

Eine besonders vorteilhafte Maßnahme ist gemäß der vorliegenden Erfindung auch darin zu sehen, dass die Stützstrebe hohl ausgebildet ist und der Innenhohlraum der Stützstrebe beispielsweise als Saugleitung einer Unterdruckerzeugungseinrichtung ausgebildet ist. Alternativ hierzu kann der Innenhohlraum der Stützstrebe auch zur Aufnahme und Verlegung von Versorgungsleitungen dienen, was die gesamte Vorrichtung insgesamt sehr kompakt gestaltet und dazu beiträgt, Störquellen oder Beschädigungen an den Versorgungsleitungen zu reduzieren oder gänzlich zu vermeiden. Auf diese Weise werden zudem externe Leitungsführungen vermieden, was die Strömungsführung beziehungsweise die Leitungsführung insgesamt wesentlich vereinfacht und zudem kostenintensive Bauteile einspart. Wird die Stützstrebe selbst als Bestandteil der Unterdruckerzeugungseinrichtung verwendet, so weist die in diesem Fall hohl ausgeführte Stützstrebe hierfür an ihrem der Einspannseite gegenüberliegenden Ende einen Anschluss auf, der für die Kopplung mit der Unterdruckerzeugungseinrichtung zum Einsatz kommt. Im einfachsten Fall kann dies eine Bohrung sein, die den Anschluss der Unterdruckerzeugungseinrichtung beispielsweise über ein in die Bohrung eingebrachtes Gewinde aufnimmt.

Das erfindungsgemäße Verfahren zur Lagerung eines zu vermessenden und/oder zu bearbeitenden Werkstücks mit mindestens einer, bevorzugt jedoch mit mehreren Vorrichtungen, wie sie zuvor beschrieben wurden, ist durch folgende Verfahrensschritte gekennzeichnet:
- Anordnung der Vorrichtung(en) in einem Rahmen mittels eines anhand von CAD-Daten programmgesteuerten Roboters,
- Kalibrierung einer neutralen Ausgangslage sämtlicher, in dem Rahmen vorhandener Vorrichtungen, indem bei gelöstem Spannmechanismus die Stützstrebe jeder Vorrichtung, mittels des anhand der CAD-Daten programmgesteuerten Roboters soweit abgesenkt, verschwenkt und/oder in Rotation versetzt wird, dass das an dem Adapter vorhandene Justierelement vollständig in der korrespondierenden Aussparung des Gehäuses der Vorrichtung aufgenommen ist, wobei auch die Lagereinheit entsprechend justiert wird,
- ausgehend von der damit definierten Neutrallage der gesamten Vorrichtung bewegt der Roboter anschließend die Stützstrebe translatorisch und/oder verschwenkt beziehungsweise rotiert diese entsprechend der vorgegebenen CAD-Daten, bei gleichzeitiger oder sich anschließender
- Anpassung der Lagereinheit einer jeden Vorrichtung auf die Werkstückoberfläche, entsprechend der vorgegebenen CAD-Daten und mit Hilfe des Roboters,
- Aktivierung der einzelnen Spannmechanismen, sodass die Vorrichtungen und deren Lagereinheiten in ihren eingestellten Positionen fixiert sind und dadurch bewirkte Fixierung des abschließend zu vermessenden und/oder zu bearbeitenden Werkstücks.

Dabei ist von besonderer Bedeutung, dass mit dem erfindungsgemäßen Verfahren eine nahezu vollständige Automatisierung des Einspannens und des Wechsels eines Werkstücks möglich wird, wenn mindestens ein programmgesteuerter Roboter zum Einsatz kommt. Der besondere Vorteil der hier vorgestellten Lösung besteht insbesondere darin, dass die konstruktiv vorgegebenen CAD-Daten eines Werkstücks unmittelbar dazu genutzt werden können, die erforderlichen Vorrichtungen in einen geeigneten Rahmen einzusetzen und diese anschließend mittels des Roboters auszurichten, sodass sie der zu lagernden Oberfläche des zu bearbeitenden oder zu vermessenen Werkstücks insgesamt optimal angepasst werden können. Das Werkstück kann damit spannungsfrei und toleranzfrei fixiert werden, was einen erheblichen Vorteil für die Qualität der Vermessung oder Bearbeitung des Werkstückes darstellt.

Das erfindungsgemäße Verfahren kann dadurch weitergebildet werden, dass nach der Aktivierung der einzelnen Spannmechanismen und der damit bewirkten Fixierung der einzelnen Vorrichtungen und deren Lagereinheiten in ihrer eingestellten Position und vor der Auflage des Werkstücks auf die ausgerichteten Lagereinheiten der einzelnen Vorrichtungen der Roboter die exakte Positionierung der einzelnen Vorrichtungen mit ihren jeweiligen Lagereinheiten vermisst und somit kontrolliert.

Darüber hinaus kann das Auflegen oder Aufsetzen des Werkstückes auf die Lagereinheiten der Vorrichtungen manuell oder automatisiert erfolgen, wobei die Automatisierung mittels des vorhandenen Roboters erfolgt.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: mehrere, in einem Rahmen aufgenommene Vorrichtungen zur lösbaren Fixierung eines Werkstückes und einen Roboter hierfür,
- Figur 2:: die Unterseite eines Werkstücks mit einer das Werkstück lagernden Vorrichtung,
- Figur 3:: die Vorrichtung aus Figur 2 in einer vergrößerten Darstellung,
- Figur 4:: eine Lagereinheit in ihrer Grundstellung,
- Figur 5:: die Lagereinheit aus Figur 4 in einer Hochstellung,
- Figur 6:: die Lagereinheit aus Figur 4 in einer um 45° geneigten Position des Fixierungselements,
- Figur 7:: die Lagereinheit aus Figur 4 in einer um 45° geneigten Position des Hexapods und einer vertikalen Ausrichtung des Fixierungselements,
- Figur 8:: eine erfindungsgemäße Vorrichtung, jedoch ohne die auf dem Adapter angeordnete Lagereinheit,
- Figur 9:: ein Blick in das das Kugelgelenk aufweisende Gehäuse einer Vorrichtung
und
- Figur 10:: eine Lagerkugel zur Aufnahme der Stützstrebe einer Vorrichtung als separiertes Einzelteil und in räumlicher Darstellung.

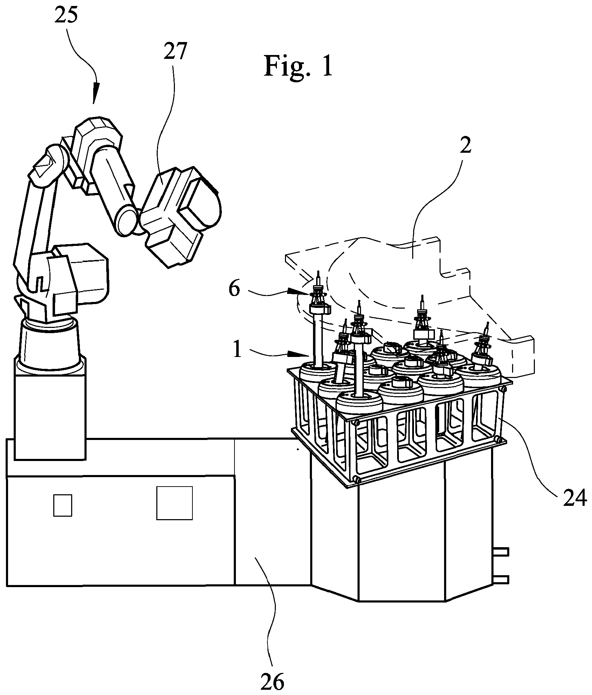

In der Figur 1 ist ein insgesamt mit der Bezugsziffer 25 bezeichneter Roboter dargestellt, wie er für die Handhabung der Vorrichtungen 1 zur lösbaren Fixierung eines zu vermessenden und/oder zu bearbeitenden Werkstücks 2 zum Einsatz kommen kann. Der Roboter 25 ist darüber hinaus auch in der Lage, die auf den Vorrichtungen 1 gelagerten und fixierten Werkstücke 2 zu bearbeiten oder zu vermessen, wofür der in Figur 1 gezeigte Roboter 25 einen Roboterkopf 27 am Ende seines Roboterarmes aufweist, der beispielsweise mit einer optischen Messeinheit ausgestattet ist. Die Ausstattung des Roboters 25 mit Bearbeitungswerkzeugen oder Messeinrichtungen erfolgt vollautomatisch, wozu der Roboter 25 einen Werkzeugwechsler aufweist, der zu den Messeinrichtungen beziehungsweise zu den Bearbeitungswerkzeugen kompatibel ist. Die einzelnen Bearbeitungswerkzeuge oder Messeinrichtungen werden dabei in vorhandenen Magazinen gelagert und vom Roboter 25 selbsttätig entnommen. Die in der Figur 1 dargestellten, einzelnen Vorrichtungen 1 sind in einem Rahmen 24 aufgenommen und wurden vor dem Fixieren des Werkstücks 2 durch den Roboter 25 in ihrer endgültigen Lage positioniert. Die Verbindung zwischen den Vorrichtungen 1 und dem Werkstück 2 bildet dabei jeweils eine Lagereinheit 6, die als Hexapod ausgeführt ist und die ein Fixierungselement 12 aufnimmt. Der Aufbau der einzelnen Elemente wird nachfolgend anhand der weiteren Figuren noch näher und im Detail beschrieben. Bei dem in Figur 1 gezeigten Beispiel sind der Roboter 25 und der Rahmen 24 gemeinsam von einem Robotertisch 26 aufgenommen.

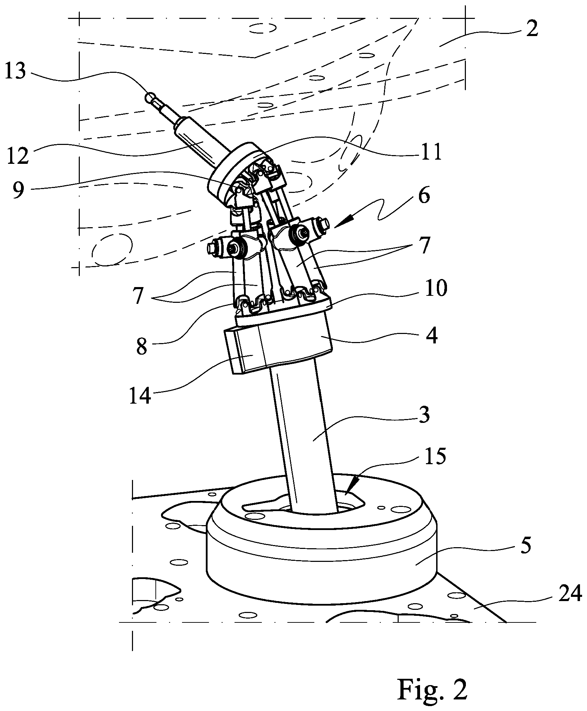

In der Figur 2 ist die Unterseite eines Werkstücks 2 mit einer dieses lagernden Vorrichtung 1 dargestellt. Wie aus der Darstellung ersichtlich wird, ist die Struktur der Oberfläche des einzuspannenden Werkstücks 2 sehr komplex und erfordert für die optimale Fixierung des Werkstücks 2 eine flexible Vorrichtung 1. Die Vorrichtung 1 besteht aus dem genannten Grund aus einer Stützstrebe 3, die schwenkbar und in ihrer axialen Länge verstellbar über ein Kugelgelenk 16 in dem Gehäuse 5 gelagert ist. Das Gehäuse 5 zur Aufnahme der Stützstrebe 3 ist seinerseits in einem Rahmen 24 aufgenommen, der neben der in Figur 2 gezeigten Vorrichtung 1 weitere Vorrichtungen aufnehmen kann um die komplexe Struktur der Oberfläche des Werkstücks 2 optimal abzubilden. Auf der dem Gehäuse 5 gegenüberliegenden Seite der Stützstrebe 3 ist ein Adapter 4 angeordnet, dessen Oberseite lösbar mit einer Lagereinheit 6 verbunden ist. Die Lagereinheit 6 weist eine Bodenplatte 10 und mehrere Stellglieder 7, die mit der Bodenplatte 10 über Gelenke 8 verbunden sind, auf. Bei den Stellgliedern 7 handelt es sich im dargestellten Beispiel um pneumatisch betätigte Kolben-Zylindereinheiten. Die als Kolben-Zylindereinheiten ausgeführten Stellglieder 7 können einzeln und unabhängig voneinander in axialer Richtung in ihrer Länge verstellt werden und nehmen an ihrer der Bodenplatte 10 abgewandten Oberseite eine Tragplatte 11 auf, die wiederum der lösbaren Befestigung eines Fixierungselements 12 dient. Die Verbindung der Stellglieder 7 mit der Bodenplatte 10 erfolgt über Gelenke 8 und die Verbindung der Stellglieder 7 mit der Tragplatte 11 erfolgt über baugleich zu den Gelenken 8 ausgeführte Gelenke 9. Die Tragplatte ist als Flansch ausgeführt, sodass das darauf befestigte Fixierungselement 12 auf einfache Weise an der Tragplatte 11 befestigt und von dieser gelöst werden kann. Das mit der Oberfläche des Werkstücks 2 in Kontakt kommenden Endstück des Fixierungselements 12 weist hier einen Kugelkopf 13 auf, sodass die Berührungsfläche zwischen Werkstück 2 und Fixierungselement 12 punktuell ist.

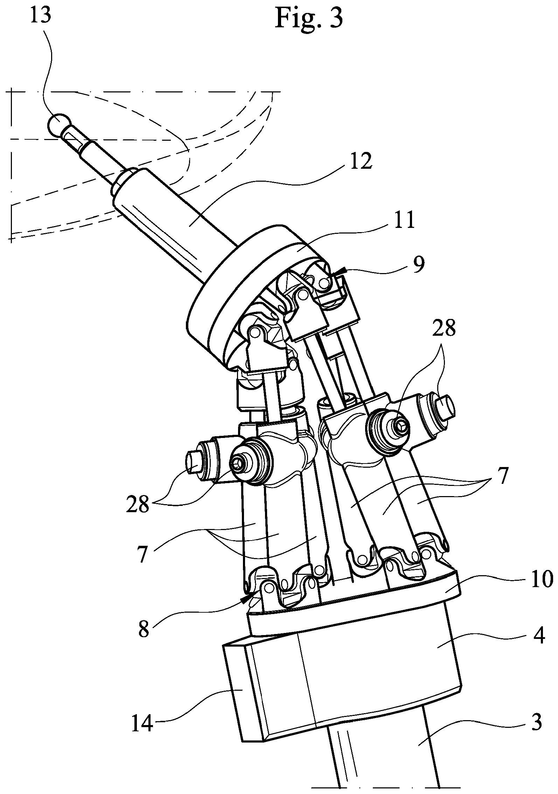

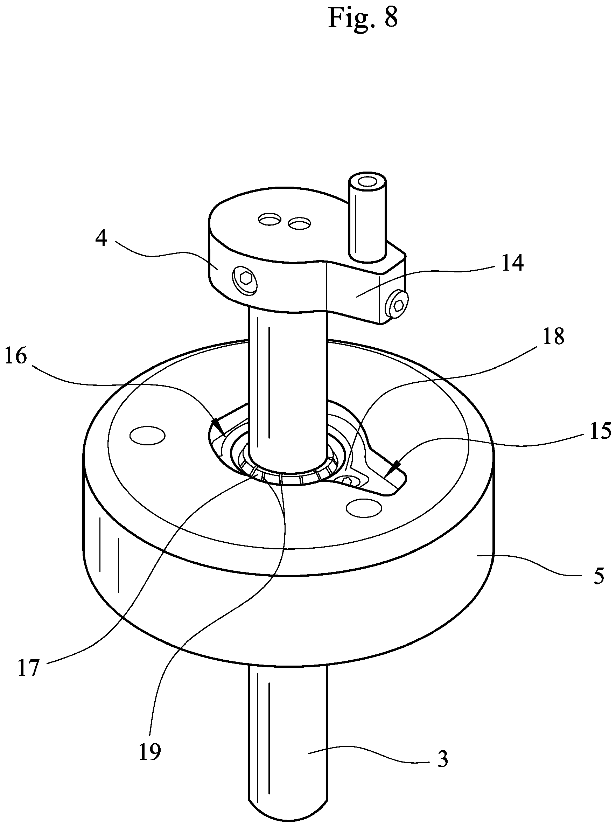

In der Figur 3 ist nochmals die Vorrichtung 1 aus Figur 2, jedoch ausschnittsweise und in vergrößerter Darstellung gezeigt, sodass die Details hier deutlicher zum Ausdruck kommen. Aus dieser Darstellung geht auch hervor, dass die Stellglieder 7 jeweils Druckluftanschlüsse 28 aufweisen, die mit korrespondierenden Druckluftleitungen verbunden werden, um die Ausstellbewegung beziehungsweise die Einzugsbewegung der als Kolben-Zylindereinheiten ausgeführten Stellglieder 7 umsetzen zu können. Aus der Figur 3 geht auch deutlicher, als dies im Zusammenhang mit der Darstellung in Figur 2 möglich war, hervor, dass die bodenplattenseitigen Gelenke 8 sowie die tragplattenseitigen Gelenke 9 jeweils als Kreuzgelenke ausgeführt sind und somit Bewegungen in mehreren Richtungen ermöglichen. In der Darstellung der Figur 3 sind die Stellglieder 7 in unterschiedlichen Längen teilweise ausgefahren dargestellt. Dadurch ergibt sich eine Neigung des Fixierungselementes 12, sodass die Oberfläche des Werkstücks 2 optimal über den Kugelkopf 13 des Fixierungselements 12 abgestützt werden kann. Im unteren Bildteil der Figur 3 ist zudem der Adapter 4 erkennbar, der die Oberseite der Stützstrebe 3 bildet und einseitig ein Justierelement 14 aufweist, dessen Funktion nachfolgend im Zusammenhang mit der Beschreibung der Figur 8 näher erläutert wird.

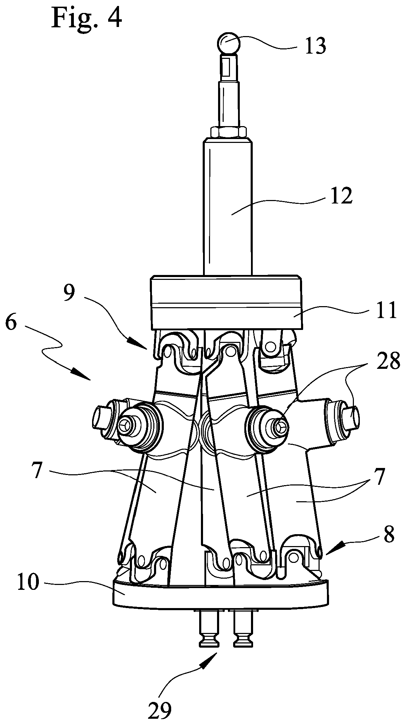

In den Figuren 4-7 werden unterschiedliche Positionen der Lagereinheit 6 der Vorrichtung 1 dargestellt.

So zeigt die Figur 4 zunächst eine Grundstellung der Lagereinheit 6, wobei die Stellglieder 7 des Hexapods vollständig eingefahren sind und das Fixierungselement 12, welches auf der Tragplatte 11 angeordnet ist, eine vertikale Ausrichtung aufweist. In dieser Stellung sind auch die Gelenke 8 und 9 der Stellglieder 7, über die die Stellglieder 7 einerseits mit der Bodenplatte 10 und andererseits mit der Tragplatte 11 beweglich gekoppelt sind, in einer nicht ausgelegten Position ausgerichtet. Aus der Darstellung der Figur 4 wird auch ersichtlich, dass die Bodenplatte 10 analog zur Tragplatte 11 ein Schnellspannsystem aufweist, wobei an der Unterseite der Bodenplatte 10 zwei Klemmelemente 29 in der Form von Klemmstiften angeordnet sind, über die eine Fixierung der Bodenplatte 10 an dem in Figur 4 nicht gezeigten Adapter 4 möglich ist.

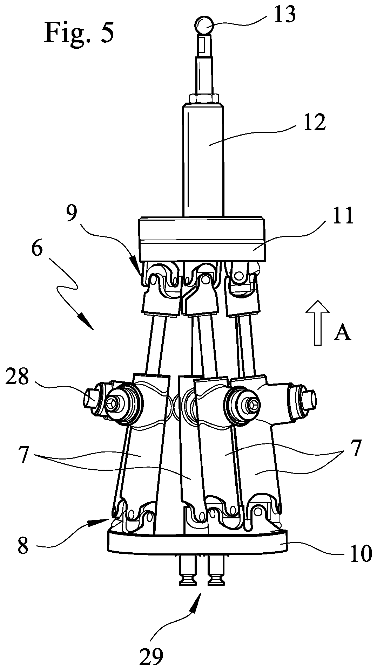

Die Figur 5 zeigt hingegen eine "Hochstellung", was bedeutet, dass hierbei die Stellglieder 7 in axialer Richtung, also in Längsrichtung maximal ausgefahren sind. Die Längsrichtung entspricht dabei dem Pfeil A in Figur 5. Hierfür wurde zuvor über die Druckluftanschlüsse 28 eine Druckluft in die Stellglieder eingebracht, die die Bewegung der Kolben bewirkt hat. Das Fixierungselement 12 ist bei dieser Stellung der Lagereinheit 6 ebenfalls vertikal ausgerichtet.

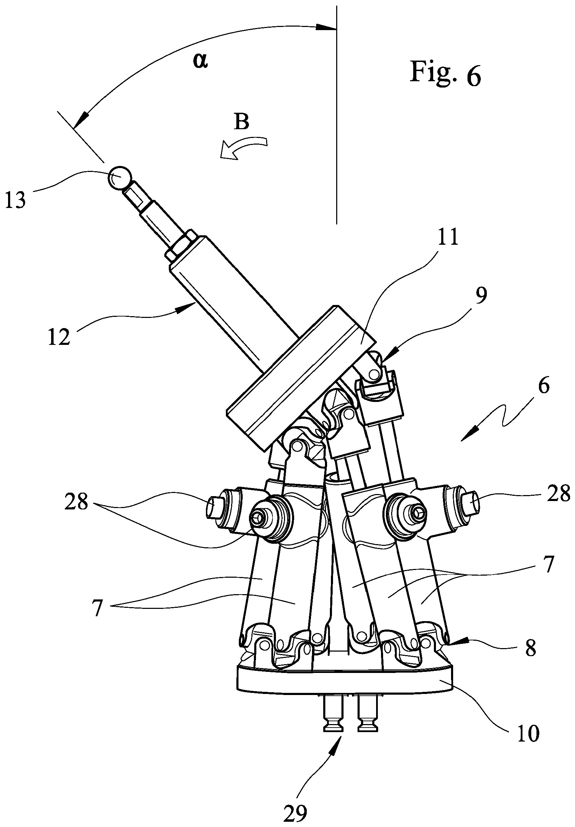

Im Unterschied zu den zuvor beschriebenen Darstellungen stellt die Figur 6 eine Position der Lagereinheit 6 dar, bei der einzelne Stellglieder 7 nur teilweise ausgefahren und zum Teil nicht ausgefahren sind, sodass eine Neigung des Fixierungselements 12 um einen Winkel α von etwa 45° in Richtung des Pfeils B erfolgt. Dabei wurde die Tragplatte 11 um die Gelenke 9 verschwenkt. Eine geringe Schwenkbewegung ist dabei im Sinne einer Ausgleichsbewegung auch in den Gelenken 8 an der Bodenplatte 10 zu verzeichnen.

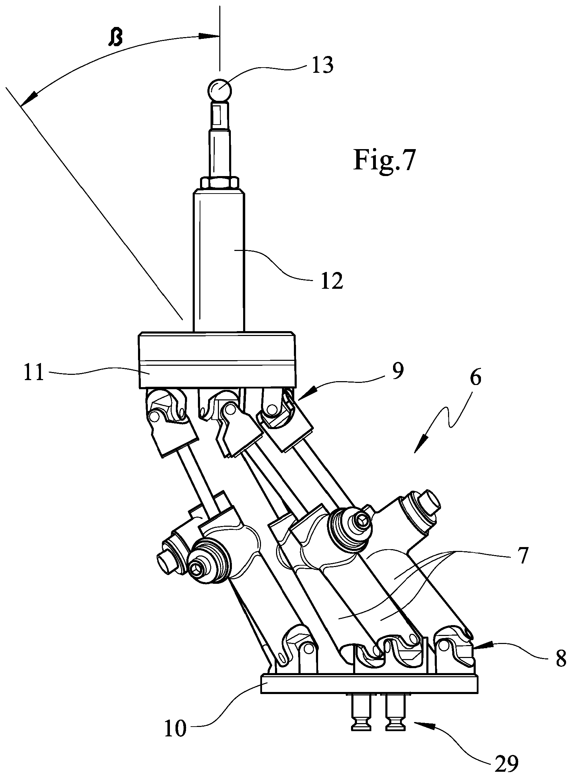

Eine weitere, in mehreren Richtungen verschwenkte Lagereinheit 6 zeigt darüber hinaus die Darstellung in Figur 7. Hierbei wurden die Stellglieder 7 um einen größeren Betrag ausgefahren, als dies bei der Darstellung in Figur 6 der Fall war. Zudem befinden sich bei der Ausführung in Figur 7 sämtliche Stellglieder 7 in einer ausgefahrenen Position. Dies ergibt eine Schwenkbewegung der Stellglieder 7 sowohl um die Gelenke 8 der Bodenplatte, als auch um die Gelenke 9 unterhalb der Tragplatte 11. Die Stellglieder 7 sind dabei um den Winkel β verschwenkt, während das Fixierungselement 12 hierbei eine etwa vertikale Position einnimmt.

Die Figur 8 zeigt einen Teil der Vorrichtung 1 zur lösbaren Fixierung eines zu vermessenden und/oder zu bearbeitenden Werkstücks 2, wobei hier die Lagereinheit 6 nicht dargestellt ist. Die Vorrichtung 1 weist eine Stützstrebe 3 mit einem an ihrem oberen, freien Ende befestigten Adapter 4 auf. Die Stützstrebe 3 ist in dem Gehäuse 5 schwenkbeweglich und entlang ihrer axialen Richtung verschiebbar gelagert. Für die Lagerung der Stützstrebe 3 kommt vorliegend ein Kugelgelenk 16 zum Einsatz, dessen Lagerkugel 17 mittelbar über eine Lagerschale 18 in dem Gehäuse 5 aufgenommen ist. Die Lagerkugel 17 weist in ihrer Mantelfläche mehrere, in axialer Richtung verlaufende und über ihren Umfang verteilt angeordnete Schlitze 19 beziehungsweise 20 auf. Durch die Schlitze 19, 20 kann die Lagerkugel 17 in zentripetaler Richtung, also zu ihrem geometrischen Mittelpunkt hin, verspannt werden, was im vorliegenden Fall mit einem in der Figur 8 nicht gezeigten Spannmechanismus 22 erfolgt, der vor Verunreinigungen geschützt in dem Gehäuse 5 aufgenommen ist. Dadurch besteht die Möglichkeit, die Stützstrebe 3 innerhalb des Kugelgelenks 16 zunächst zu verschwenken und zusätzlich die Stützstrebe 3 in Richtung ihrer axialen Erstreckung zu bewegen, sodass die Stützstrebe 3 in mehreren Bewegungsrichtungen verstellbar ausgeführt und in jeder beliebigen Position durch die Verspannung der Lagerkugel 17 fixierbar ist. Auf diese Weise kann die Stützstrebe 3 optimal an den Verlauf der Oberfläche des Werkstücks 2 angepasst werden. Die in der Figur 8 gezeigte Vorrichtung 1 weist jedoch noch weitere Besonderheiten auf. So ist beispielsweise an dem Adapter 4 ein Justierelement 14 ausgebildet, dessen Kontur passgenau in eine hierzu korrespondierende Aussparung 15 in dem Gehäuse 5 einrückt, wenn die Stützstrebe 3 sich in ihrer axial untersten und entsprechend ausgerichteten Position befindet. Das Justierelement 14 weist dabei eine Höhe auf, die der Tiefe der Aussparung 15 entspricht. Die vollständig in die Aussparung 15 eingerückte Position des Justierelements 14 dient der Kalibrierung der gesamten Vorrichtung 1 und kann in diesem Fall auch als "Nullposition" bezeichnet werden. Von hier ausgehend werden mithilfe eines räumlichen Koordinatensystems exakt die Anlagepunkte an der Oberfläche des zu lagernden beziehungsweise zu fixierenden Werkstückes 2 im Raum definiert und bestimmt.

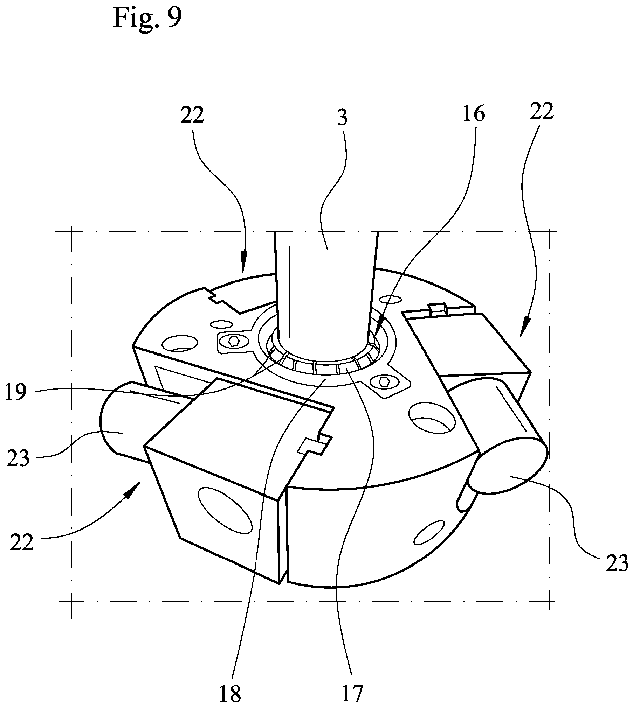

Aus der Figur 9 geht ausschnittsweise der Innenraum des Gehäuses 5 der Vorrichtung 1 zur lösbaren Fixierung eines zu vermessenden und/oder zu bearbeitenden Werkstücks 2 hervor, sodass die in dem Gehäuse 5 aufgenommenen Bestandteile der Vorrichtung 1 erkennbar werden. Hieraus wird deutlich, dass die Stützstrebe 3 eine Lagerkugel 17 durchdringt, die entlang ihrer Mantelfläche eine Vielzahl darin eingebrachter Schlitze 19, 20 aufweist. Das dadurch gebildete Kugelgelenk 16 ist in der Lagerschale 18 in dem Gehäuse 5 aufgenommen, sodass die Stützstrebe 3 sowohl in axialer Richtung verstellbar, als auch drehbar und schwenkbar in mehreren Richtungen in dem Gehäuse 5 gelagert ist. Die bereits erwähnten Schlitze 19, 20 in der Lagerkugel 17 ermöglichen eine zentripetale Verspannung der Lagerkugel 17, um damit die Stützstrebe 3 in dem Gehäuse 5 zu fixieren. Hierfür kommen mehrere Spannmechanismen 22 zum Einsatz, von denen die Vorrichtung 1 in Figur 9 insgesamt drei, jeweils um 120° zueinander versetzt angeordnete Spannmechanismen 22 aufweist. Die Spannmechanismen 22 weisen dabei Pneumatikkolben 23 auf, die über Druckluft gesteuert werden.

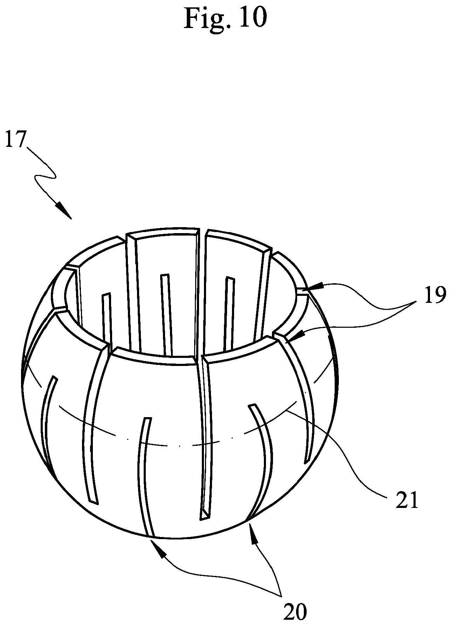

Der Figur 10 ist eine Lagerkugel 17 als separiertes Einzelteil und in einer räumlichen Darstellung entnehmbar. Die hier gezeigte Lagerkugel 17 weist eine Mantelfläche auf, die im Wesentlichen die Kugelform der Lagerkugel 17 bestimmt und deren geometrischer Äquator 21 die Mantelfläche mittig teilt. Die Lagerkugel 17 ist zudem hohl ausgebildet, sodass sie einen kreiszylindrisch ausgebildeten Innenraum aufweist. Der Innenraum der Lagerkugel 17 dient der Aufnahme der Stützstrebe 3 in der zuvor bereits beschriebenen Weise. Durch den kreiszylindrisch geformten Innenraum und die kugelförmige Mantelfläche weist die Lagerkugel 17 als obere und untere Begrenzung je eine Mantelringfläche auf, von denen in der Figur 10 lediglich die obere, dem Adapter 4 zugewandte Mantelringfläche erkennbar ist. Die Besonderheit der Lagerschale 17 einer erfindungsgemäßen Vorrichtung 1 besteht darin, dass in die Mantelfläche der Lagerschale 17 einander entgegengesetzt verlaufend mehrere Schlitze 19 und 20 eingebracht sind, die die Mantelfläche in radialer Richtung betrachtet vollständig durchdringen. Dabei gehen die Schlitze 19 von der oberen Mantelringfläche aus und verlaufen bis über den Äquator 21 hinaus. Umgekehrt verlaufen die Schlitze 20 von der unteren Mantelringfläche ausgehend ebenfalls bis über den Äquator 21 der Lagerkugel 17 hinaus. Durch diese spezielle Verlaufsform der Schlitze 19, 20 wird eine Elastizität der Lagerkugel 17 erreicht, die eine zentripetale Bewegung der Segmente der Lagerkugel 17 durch die über die Spannmechanismen 22 aufgebrachte Spannkraft ermöglicht. Auf diese Weise kann die in der Lagerkugel 17 geführte Stützstrebe 3 in jeder beliebigen Position fixiert werden.

### BEZUGSZEICHENLISTE:

- 1: Vorrichtung
- 2: Werkstück
- 3: Stützstrebe
- 4: Adapter
- 5: Gehäuse
- 6: Lagereinheit (Hexapod)
- 7: Stellglieder
- 8: Gelenk (bodenplattenseitig)
- 9: Gelenk (tragplattenseitig)
- 10: Bodenplatte
- 11: Tragplatte
- 12: Fixierungselement
- 13: Kugelkopf
- 14: Justierelement
- 15: Aussparung
- 16: Kugelgelenk
- 17: Lagerkugel
- 18: Lagerschale
- 19: Schlitz
- 20: Schlitz
- 21: Äquator
- 22: Spannmechanismus
- 23: Pneumatikkolben
- 24: Rahmen
- 25: Roboter
- 26: Robotertisch
- 27: Roboterkopf
- 28: Druckluftanschlüsse
- 29: Klemmelemente

## Patentansprüche

1. Vorrichtung (1) zur lösbaren Fixierung eines zu vermessenden und/oder zu bearbeitenden Werkstücks (2), wobei:
- die Vorrichtung (1) mindestens eine Stützstrebe (3) aufweist, an deren dem Werkstück (2) zugewandten Ende ein Adapter (4) angeordnet ist,
- die Stützstrebe (3) mit ihrem dem Werkstück (2) gegenüberliegenden Ende schwenkbar, rotierbar und in ihrer axialen Länge veränderbar in einem Gehäuse (5) gelagert ist und
- der Adapter (4) eine Lagereinheit (6) aufnimmt, **dadurch gekennzeichnet, dass** die Lagereinheit als Hexapod ausgebildet ist.

2. Vorrichtung nach Anspruch 1,
**dadurch gekennzeichnet, dass**
die als Hexapod ausgebildete Lagereinheit (6) mehrere, in ihrer Länge variierbare Stellglieder (7) aufweist, die jeweils um Gelenke (8, 9) schwenkbar, einerseits an einer Bodenplatte (10) und andererseits, also mit ihrem der Bodenplatte (10) gegenüberliegenden Ende, an einer Tragplatte (11) befestigt sind.

3. Vorrichtung nach Anspruch 2,
**dadurch gekennzeichnet, dass**
die Tragplatte (11) flanschartig als Basis für die Aufnahme eines austauschbaren Fixierungselements (12) ausgeführt ist.

4. Vorrichtung nach Anspruch 3,
**dadurch gekennzeichnet, dass**
das Fixierungselement (12) an seiner an der Oberfläche des Werkstücks (2) anliegenden Seite einen Kugelkopf (13), einen Stift, einen Magneten, einen Saugnapf, einen Gewindestift oder ein Spann- oder Greifwerkzeug aufweist.

5. Vorrichtung nach einem der vorstehend genannten Ansprüche,
**dadurch gekennzeichnet, dass**
der Adapter (4) ein Justierelement (14) aufweist, das bei vollständig abgesenkter Stützstrebe (3) in eine korrespondierende und zu dem Justierelement (14) komplementär ausgeführte Aussparung (15) des Gehäuses (5) der Vorrichtung (1) eingerückt ist.

6. Vorrichtung nach einem der vorstehend genannten Ansprüche,
**dadurch gekennzeichnet, dass**
die Stützstrebe (3) an ihrem dem Werkstück (2) gegenüberliegenden Ende ein Kugelgelenk (16) aufweist.

7. Vorrichtung nach Anspruch 6,
**dadurch gekennzeichnet, dass**
das Kugelgelenk (16) aus einer von der Stützstrebe (3) durchdrungenen Lagerkugel (17) besteht, die in dem Gehäuse (5) der Vorrichtung (1) schwenkbar beweglich gelagert ist.

8. Vorrichtung nach Anspruch 7,
**dadurch gekennzeichnet, dass**
die Lagerkugel (17) in einer Lagerschale (18) des Gehäuses (5) aufgenommen ist.

9. Vorrichtung nach Anspruch 7 oder 8,
**dadurch gekennzeichnet, dass**
die Lagerkugel (17) mehrere, in ihre Mantelfläche eingebrachte Schlitze (19, 20) aufweist.

10. Vorrichtung nach Anspruch 9,
**dadurch gekennzeichnet, dass**
die die Lagerkugel (17) vollständig durchdringenden Schlitze (19, 20) mäanderförmig verlaufen oder abwechselnd, in zueinander entgegengesetzt orientierten Richtungen bis über den Äquator (21) der Lagerkugel (17) hinaus in die Lagerkugel (17) eingebracht sind.

11. Vorrichtung nach einem der Ansprüche 6 bis 10,
**dadurch gekennzeichnet, dass**
das Kugelgelenk (16) zur Ausrichtung der Stützstrebe (3) in einer zur Fixierung des Werkstücks (2) geeigneten Position mittels eines pneumatischen, hydraulischen oder elektromagnetischen Spannmechanismus (22) fixierbar ist.

12. Vorrichtung nach Anspruch 11,
**dadurch gekennzeichnet, dass**
der in dem Gehäuse (5) der Vorrichtung (1) aufgenommene Spannmechanismus (22) zur sphärischen Klemmung der Lagerkugel (17) des Kugelgelenks (16) mindestens einen Pneumatikkolben (23), einen Federenergiespeicher mit Klemmbacken, einen Elektromagneten oder einen Hydraulikstößel aufweist.

13. Vorrichtung nach einem der vorstehend genannten Ansprüche,
**dadurch gekennzeichnet, dass**
die Stützstrebe (3) hohl ausgebildet ist und der Innenhohlraum der Stützstrebe (3) als Saugleitung einer Unterdruckerzeugungseinrichtung ausgebildet ist oder der Aufnahme von Versorgungsleitungen dient.

14. Verfahren zur Lagerung eines zu vermessenden und/oder zu bearbeitenden Werkstücks (2) mit mindestens einer Vorrichtung (1) nach einem der Ansprüche 1 bis 13,
**gekennzeichnet durch** die Verfahrensschritte:
- Anordnung mehrerer Vorrichtungen (1) in einem Rahmen (24) mittels eines anhand von CAD-Daten programmgesteuerten Roboters (25),
- Kalibrierung einer neutralen Ausgangslage sämtlicher, in dem Rahmen (24) vorhandener Vorrichtungen (1), indem bei gelöstem Spannmechanismus (22) die Stützstrebe (3) jeder Vorrichtung (1), mittels des anhand der CAD-Daten programmgesteuerten Roboters (25) soweit abgesenkt, verschwenkt und/oder in Rotation versetzt wird, dass das an dem Adapter (4) vorhandene Justierelement (14) vollständig in der korrespondierenden Aussparung (15) des Gehäuses (5) der Vorrichtung (1) aufgenommen ist, wobei auch die Lagereinheit (6) entsprechend justiert wird,
- ausgehend von der damit definierten Neutrallage der gesamten Vorrichtung (1) bewegt der Roboter (25) anschließend die Stützstrebe (3) translatorisch und/oder verschwenkt beziehungsweise rotiert diese entsprechend der vorgegebenen CAD-Daten, bei gleichzeitiger oder sich anschließender
- Anpassung der Lagereinheit (6) einer jeden Vorrichtung (1) auf die Werkstückoberfläche, entsprechend der vorgegebenen CAD-Daten und mit Hilfe des Roboters (25),
- Aktivierung der einzelnen Spannmechanismen (22), sodass die Vorrichtungen (1) und deren Lagereinheiten (6) in ihren eingestellten Positionen fixiert sind und dadurch bewirkte Fixierung des abschließend zu vermessenden und/oder zu bearbeitenden Werkstücks (2).

15. Verfahren nach Anspruch 14,
**dadurch gekennzeichnet, dass**
nach der Aktivierung der einzelnen Spannmechanismen (22) und der damit bewirkten Fixierung der einzelnen Vorrichtungen (1) und deren Lagereinheiten (6) in ihrer eingestellten Position und vor der Auflage des Werkstücks (2) auf die ausgerichteten Lagereinheiten (6) der einzelnen Vorrichtungen (1) der Roboter die exakte Positionierung der einzelnen Vorrichtungen (1) mit ihren jeweiligen Lagereinheiten (6) vermisst und somit kontrolliert.

16. Verfahren nach Anspruch 14 oder 15,
**dadurch gekennzeichnet, dass**
das Auflegen oder Aufsetzen des Werkstückes (2) auf die Lagereinheiten (6) der Vorrichtungen (1) manuell oder automatisiert, mittels des Roboters, erfolgt.

## Claims

1. Device (1) for releasably fixing a workpiece (2) to be measured and/or to be processed, wherein:
- the device (1) has at least one supporting strut (3), at the end of which that faces the workpiece (2), an adapter (4) is arranged,
- the supporting strut (3) is mounted with its end opposite the workpiece (2) in a housing (5) so as to be pivotable, rotatable and variable in its axial length, and
- the adapter (4) receives a bearing unit (6), **characterized in that** the bearing unit is in the form of a hexapod.

2. Device according to Claim 1,
**characterized in that**
the bearing unit (6) in the form of a hexapod has a plurality of actuators (7) of variable length which are each fastened, so as to be pivotable about joints (8, 9), at one end to a base plate (10) and at the other end, i.e. with their end opposite the base plate (10), to a support plate (11) .

3. Device according to Claim 2,
**characterized in that**
the support plate (11) is embodied in a flange-like manner as the basis for receiving an interchangeable fixing element (12).

4. Device according to Claim 3,
**characterized in that**
the fixing element (12) has, on its side that bears on the surface of the workpiece (2), a ball head (13), a pin, a magnet, a suction cup, a threaded pin or a clamping or gripping tool.

5. Device according to one of the preceding claims, **characterized in that**
the adapter (4) has an adjusting element (14) which, with the supporting strut (3) fully lowered, is engaged in a corresponding cutout (15), embodied so as to be complementary to the adjusting element (14), in the housing (5) of the device (1).

6. Device according to one of the preceding claims, **characterized in that**
the supporting strut (3) has a ball joint (16) at its end opposite the workpiece (2).

7. Device according to Claim 6,
**characterized in that**
the ball joint (16) consists of a bearing ball (17) through which the supporting strut (3) penetrates and which is mounted so as to be pivotably movable in the housing (5) of the device (1) .

8. Device according to Claim 7,
**characterized in that**
the bearing ball (17) is received in a bearing shell (18) of the housing (5).

9. Device according to Claim 7 or 8,
**characterized in that**
the bearing ball (17) has a plurality of slots (19, 20) introduced into its lateral surface.

10. Device according to Claim 9,
**characterized in that**
the slots (19, 20) that pass fully through the bearing ball (17) extend in a meandering manner or have been introduced alternately into the bearing ball (17) in mutually oppositely oriented directions to beyond the equator (21) of the bearing ball (17).

11. Device according to one of Claims 6 to 10, **characterized in that**
the ball joint (16) is fixable, in order to orient the supporting strut (3) in a position suitable for fixing the workpiece (2), by means of a pneumatic, hydraulic or electromagnetic clamping mechanism (22).

12. Device according to Claim 11,
**characterized in that**
the clamping mechanism (22), received in the housing (5) of the device (1), for spherically clamping the bearing ball (17) of the ball joint (16) has at least one pneumatic piston (23), a spring energy accumulator having clamping jaws, an electromagnet or a hydraulic plunger.

13. Device according to one of the preceding claims, **characterized in that**
the supporting strut (3) is hollow and the interior cavity of the supporting strut (3) is configured as a suction line of a negative-pressure generator or serves to receive supply lines.

14. Method for mounting a workpiece (2) to be measured and/or to be processed, with at least one device (1) according to one of Claims 1 to 13, **characterized by** the method steps of:
- arranging a plurality of devices (1) in a frame (24) by means of a robot (25) program-controlled on the basis of CAD data,
- calibrating a neutral starting position of all the devices (1) present in the frame (24) in that, with the clamping mechanism (22) released, the supporting strut (3) of each device (1) is lowered, pivoted and/or set in rotation by means of the robot (25) program-controlled on the basis of CAD data, to such an extent that the adjusting element (14) present on the adapter (4) is received entirely in the corresponding cutout (15) in the housing (5) of the device (1), wherein the bearing unit (6) is also adjusted correspondingly,
- starting from the neutral position, defined in this way, of the entire device (1), the robot (25) subsequently moves the supporting stut (3) in translation and/or pivots or rotates the latter in accordance with the specified CAD data, while at the same time or subsequently
- adapting the bearing unit (6) of each device (1) to the workpiece surface in accordance with the specified CAD data and with the aid of the robot (25),
- activating the individual clamping mechanisms (22) such that the devices (1) and their bearing units (6) are fixed in their set positions and fixing, brought about thereby, of the workpiece (2) ultimately to be measured and/or processed.

15. Method according to Claim 14,
**characterized in that**
after the activation of the individual clamping mechanisms (22) and the fixing, brought about thereby, of the individual devices (1) and their bearing units (6) in their set position, and before the application of the workpiece (2) to the oriented bearing units (6) of the individual devices (1), the robot measures and thus checks the exact positioning of the individual devices (1) with their respective bearing units (6).

16. Method according to Claim 14 or 15, **characterized in that**
the application of the workpiece (2) to or placement thereof on the bearing units (6) of the devices (1) takes place manually or automatically, by means of the robot.

## Revendications

1. Dispositif (1) de fixation amovible d'une pièce (2) à mesurer et/ou à usiner :
- le dispositif (1) comprenant au moins une entretoise de soutien (3) à l'extrémité, tournée vers la pièce (2), de laquelle est disposé un adaptateur (4),
- l'entretoise de soutien (3) étant montée, par son extrémité opposée à la pièce (2), dans un boîtier (5) de manière pivotante, rotative et de manière à présenter une longueur axiale modifiable et
- l'adaptateur (4) recevant une unité de montage (6),
**caractérisé en ce que** l'unité de montage est réalisée sous forme d'hexapode.

2. Dispositif selon la revendication 1,
**caractérisé en ce que**
l'unité de montage (6) réalisée sous forme d'hexapode comprend plusieurs organes de réglage (7) de longueur variable, qui sont fixés respectivement de manière pivotante autour d'articulations (8, 9), d'un côté à une plaque de base (10) et de l'autre côté, c'est-à-dire par leur extrémité opposée à la plaque de base (10), à une plaque de support (11).

3. Dispositif selon la revendication 2,
**caractérisé en ce que**
la plaque de support (11) est réalisée sous forme de bride comme base pour la réception d'un élément de fixation (12) interchangeable.

4. Dispositif selon la revendication 3,
**caractérisé en ce que**
l'élément de fixation (12) comprend, sur son côté s'appuyant contre la surface de la pièce (2), une tête sphérique (13), une tige, un aimant, une ventouse, une tige filetée ou un outil de serrage ou de préhension.

5. Dispositif selon l'une des revendications précédentes,
**caractérisé en ce que**
l'adaptateur (4) comprend un élément d'ajustement (14) qui, lorsque l'entretoise de soutien (3) est complètement abaissée, est enclenché dans un évidement (15), correspondant et réalisé de manière complémentaire à l'élément d'ajustement (14), du boîtier (5) du dispositif (1).

6. Dispositif selon l'une des revendications précédentes,
**caractérisé en ce que**
l'entretoise de soutien (3) comprend une articulation sphérique (16) à son extrémité opposée à la pièce (2).

7. Dispositif selon la revendication 6, **caractérisé en ce que**
l'articulation sphérique (16) est constituée d'une sphère de palier (17) traversée par l'entretoise de soutien (3), laquelle sphère de palier est montée de manière mobile en pivotement dans le boîtier (5) du dispositif (1).

8. Dispositif selon la revendication 7, **caractérisé en ce que**
la sphère de palier (17) est reçue dans un coussinet de palier (18) du boîtier (5).

9. Dispositif selon la revendication 7 ou 8, **caractérisé en ce que**
la sphère de palier (17) comprend plusieurs fentes (19, 20) ménagées dans sa surface d'enveloppe.

10. Dispositif selon la revendication 9,
**caractérisé en ce que**
les fentes (19, 20) traversant complètement la sphère de palier (17) s'étendent de manière sinueuse ou sont ménagées dans la sphère de palier (17) en alternance, dans des sens orientés de manière opposée l'un à l'autre jusqu'au-delà de l'équateur (21) de la sphère de palier (17).

11. Dispositif selon l'une des revendications 6 à 10, **caractérisé en ce que**
l'articulation sphérique (16) peut être, pour l'alignement de l'entretoise de soutien (3) dans une position appropriée pour la fixation de la pièce (2), fixée au moyen d'un mécanisme de serrage (22) pneumatique, hydraulique ou électromagnétique.

12. Dispositif selon la revendication 11, **caractérisé en ce que**
le mécanisme de serrage (22) reçu dans le boîtier (5) du dispositif (1) comprend, pour le serrage sphérique de la sphère de palier (17) de l'articulation sphérique (16), au moins un piston pneumatique (23), un accumulateur d'énergie à ressort doté de mâchoires de serrage, un électroaimant ou un poussoir hydraulique.

13. Dispositif selon l'une des revendications précédentes,
**caractérisé en ce que**
l'entretoise de soutien (3) est réalisée de manière creuse et l'espace creux intérieur de l'entretoise de soutien (3) est réalisé sous forme de conduite d'aspiration d'un dispositif de génération de dépression ou sert à la réception de conduites d'alimentation.

14. Procédé de montage d'une pièce (2) à mesurer et/ou à usiner à l'aide d'au moins un dispositif (1) selon l'une des revendications 1 à 13, **caractérisé par** les étapes de procédé suivantes :
- disposition de plusieurs dispositifs (1) dans un cadre (24) au moyen d'un robot (25) commandé par programme sur la base de données de CAO,
- étalonnage d'une position initiale neutre de tous les dispositifs (1) présents dans le cadre (24), par le fait que lorsque le mécanisme de serrage (22) est relâché, l'entretoise de soutien (3) de chaque dispositif (1) est, au moyen du robot (25) commandé par programme sur la base de données de CAO, abaissée, pivotée et/ou mise en rotation dans une mesure telle que l'élément d'ajustement (14) présent sur l'adaptateur (4) soit reçu complètement dans l'évidement (15) correspondant du boîtier (5) du dispositif (1), l'unité de montage (6) étant également ajustée de manière correspondante,
- à partir de la position neutre ainsi définie de l'ensemble du dispositif (1), le robot (25) déplace ensuite l'entretoise de soutien (3) en translation et/ou pivote ou fait tourner celle-ci conformément aux données de CAO prédéfinies, avec simultanément ou ensuite
- adaptation de l'unité de montage (6) de chaque dispositif (1) à la surface de pièce, conformément aux données de CAO prédéfinies et à l'aide du robot (25),
- activation des mécanismes de serrage (22) individuels, de telle sorte que les dispositifs (1) et leurs unités de montage (6) soient fixés dans leurs positions réglées et par conséquent fixation effectuée de la pièce (2) à mesurer et/ou à usiner finalement.

15. Procédé selon la revendication 14, **caractérisé en ce**
**qu'**après l'activation des mécanismes de serrage (22) individuels et la fixation ainsi effectuée des dispositifs (1) individuels et de leurs unités de montage (6) dans leur position réglée et avant la pose de la pièce (2) sur les unités de montage (6) alignées des dispositifs (1) individuels, le robot mesure et par conséquent contrôle le positionnement exact des dispositifs (1) individuels dotés de leurs unités de montage (6) respectives.

16. Procédé selon la revendication 14 ou 15, **caractérisé en ce que**
la pose ou le placement de la pièce (2) sur les unités de montage (6) des dispositifs (1) s'effectue de manière manuelle ou automatisée, au moyen du robot.
